# FASCICULE DE BREVET EUROPEEN

(11) **EP 0 695 903 B1**
(45) Date de publication et mention de la délivrance du brevet: **10.09.1997**
(21) Numéro de dépôt: 95111503.9
(22) Date de dépôt: 21.07.1995
(51) Int. Cl.: F16L 37/10

(54) **Agencement pour le raccordement étanche et démontable d'une canalisation sur un embout appartenant à un raccord**
Anordnung zur dichten und trennbaren Verbindung einer Rohrleitung mit dem Ende einer Kupplung
Tight and separable connection arrangement of a conduit with the end of a connection

(30) Priorité: 25.07.1994 FR 9409275
(43) Date de publication de la demande: 07.02.1996
(73) Titulaire: PAUL JOURNEE S.A., F-60240 Reilly (FR)
(72) Inventeur: Romanek, Christian, F-60430 Noailles (FR); Crepin, Christophe, F-92400 Courbevoie (FR); Denizot, François, F-60250 Mouy (FR)
(74) Mandataire: Lemaire, Marc

(56) Documents cités:
- EP-A- 0 140 995
- EP-A- 0 334 717
- EP-A- 0 367 136
- AT-B- 29 973
- GB-A- 2 273 964
- US-A- 2 772 898

## Description

La présente invention concerne un agencement pour le raccordement étanche et démontable de la portion d'extrémité d'une canalisation tubulaire sur un embout tubulaire appartenant à un raccord de canalisation. Dans l'agencement connu de US-A-2 772 898, les moyens de retenue comportent un bras déformable muni d'un bec de retenue qui coopère avec un cran de retenue, et sont agencés dans un logement annulaire délimité radialement par la surface cylindrique extérieure de l'embout et la surface interne d'une virole appartenant à la portion d'extrémité.

La présente invention concerne plus particulièrement le raccordement d'une canalisation de diamètre relativement important, notamment supérieur à 25 mm, appartenant au circuit de remplissage du réservoir de carburant d'un véhicule automobile.

L'invention a pour but de proposer un agencement du type à raccord encliquetable qui assure une parfaite étanchéité entre la canalisation et l'embout tubulaire dans lequel la portée d'étanchéité du tronçon d'extrémité de la canalisation ne soit pas exposée à des coups et ne soit donc pas susceptible d'être endommagée avant son raccordement à l'embout, et d'une conception dans laquelle l'encombrement global de l'agencement soit réduit.

Dans ce but, l'invention propose un agencement pour le raccordement étanche et démontable de la portion d'extrémité d'une canalisation tubulaire sur un embout tubulaire appartenant à un raccord de canalisation, l'embout étant reçu axialement et de manière étanche à l'intérieur de la portion d'extrémité de la canalisation et la portion d'extrémité de la canalisation étant retenue axialement par rapport au raccord par des moyens de retenue à emboîtement élastique qui sont agencés entre le raccord et la surface périphérique de la portion d'extrémité de la canalisation et qui comportent au moins un bras de retenue déformable élastiquement muni d'un bec de retenue qui coopère avec un cran de retenue, et des moyens de commande de l'effacement du bec de retenue pour permettre l'extraction axiale de la portion d'extrémité de la canalisation hors du raccord, caractérisé en ce que les moyens de retenue sont agencés dans un logement annulaire délimité radialement par la surface cylindrique extérieure de l'embout et par la surface cylindrique interne d'une virole appartenant au corps du raccord, et qui est délimité axialement à l'une de ses extrémités par la portion de surface annulaire transversale d'une paroi radiale de liaison entre l'embout et la virole.

Selon d'autres caractéristiques de modifications de l'invention :
- le cran de retenue est une nervure annulaire ;
- le bras de retenue s'étend axialement et le bec de retenue est formé au voisinage d'une extrémité libre du bras de retenue ;
- le cran de retenue est formé sur la surface périphérique de la portion d'extrémité de la canalisation et le bras de retenue est porté par le corps du raccord;
- il est prévu deux bras de retenue diamétralement opposés ;
- l'agencement comporte une douille de retenue liée en rotation au raccord, qui s'étend à l'intérieur dudit logement annulaire et dont la paroi annulaire est fendue axialement pour délimiter, par deux fentes parallèles, au moins un bras de retenue déformable élastiquement réalisé venu de matière avec la douille de retenue ;
- les moyens de commande de l'effacement du bec de retenue comportent un organe mobile de commande qui comporte une came de commande des déformations élastiques du bras de retenue ;
- l'organe de commande est rappelé élastiquement vers une position de repos dans laquelle le bec de retenue est rappelé élastiquement vers une position de retenue axiale de la portion d'extrémité de la canalisation ;
- l'organe de commande est monté mobile par rapport au corps du raccord ;
- l'organe de commande est monté mobile en rotation;
- l'organe de commande est une bague de commande qui est montée à rotation à l'intérieur de la douille de retenue et dont la surface extérieure comporte une came qui coopère avec une partie en vis-à-vis formée sur la surface intérieure du bras de retenue;
- la bague de commande comporte une collerette formant poignée de commande qui s'étend axialement à l'extérieur de la douille de retenue et du logement annulaire ;
- la paroi annulaire de la douille de retenue est fendue axialement par trois fentes parallèles pour délimiter deux bras de rappel déformables élastiquement entre lesquels est reçu un ergot formé en saillie sur la surface extérieure de la bague de commande ;
- la douille de retenue comporte deux paires de bras de rappel diamétralement opposées, avec chacune desquelles coopère un ergot de la bague de commande ;
- les bras de rappel sont agencés dans un plan axial décalé angulairement de 90° par rapport au plan des bras de retenue ;
- en position raccordée, le bord d'extrémité libre de la portion d'extrémité de la canalisation est en appui contre la face annulaire en vis-à-vis de la paroi radiale du raccord de manière à immobiliser axialement la canalisation par rapport au raccord ;
- la surface périphérique de l'embout comporte une gorge annulaire qui reçoit au moins un joint torique d'étanchéité ;
- la gorge reçoit deux joints toriques d'étanchéité entre lesquels est agencée une entretoise tubulaire;
- la gorge annulaire est délimitée axialement par un épaulement radial réalisé venu de matière avec le corps tubulaire de l'embout et par la face annulaire d'extrémité d'un manchon extérieur rapporté sur le corps de l'embout dont la surface cylindrique extérieure est reçue en coulissement à l'intérieur de la portion d'extrémité de la canalisation.

D'autres avantages de l'invention apparaîtront à la lecture de la description détaillée qui va suivre pour la compréhension de laquelle on se reportera aux dessins annexés dans lesquels :
- La figure 1 est une vue en section axiale, selon la ligne 1-1 de la figure 2, d'un agencement conforme aux enseignements de l'invention qui est illustré en position raccordée et verrouillée axialement du tronçon d'extrémité d'une canalisation ;
- la figure 2 est une vue en section radiale, selon la ligne 2-2 de la figure 1 ;
- la figure 3 est une vue en perspective éclatée de certains des composants de l'agencement illustré aux figures 1 et 2, illustrés dans leur même position angulaire relative ; et
- la figure 4 est une vue similaire à celle de la figure 2, à plus grande échelle, illustrant la bague de commande en position de déverrouillage de la canalisation.

L'agencement selon l'invention qui est illustré sur les figures est constitué pour l'essentiel par un raccord 10 qui permet le raccordement étanche d'une canalisation 12 dont un tronçon d'extrémité comme portion d'extrémité 14 est illustré sur les figures.

Le tronçon d'extrémité 14 de la canalisation 12 est pour l'essentiel constitué par un tronçon tubulaire cylindrique qui prolonge une partie annelée souple 16 constituant le corps de la canalisation proprement dite.

Le tronçon tubulaire comporte, au voisinage de son bord d'extrémité libre annulaire 18, une nervure radiale extérieure 20.

Le tronçon d'extrémité de la canalisation 12 est reçu axialement à l'intérieur d'un logement annulaire cylindrique 22 formé dans le corps 24 du raccord 10.

A cet effet, le corps 24 est pour l'essentiel constitué par un embout tubulaire cylindrique interne 26 d'axe X-X et par une virole tubulaire externe 28 coaxiale à l'embout 26, ces deux éléments 26 et 28 étant reliés entre eux par une paroi radiale d'extrémité 30 réalisée venue de matière par moulage en matière plastique avec l'embout 26 et la virole 28.

Le logement 22 est ainsi délimité par la surface cylindrique interne 31 de la virole 28 et par la surface cylindrique extérieure 32 de l'embout 26, et axialement par la portion de surface annulaire transversale 34 de la paroi radiale 30.

L'embout tubulaire 26 présente, pratiquement sur toute sa longueur axiale, un diamètre extérieur réduit qui délimite une surface cylindrique 38 sur laquelle est emmanché un manchon métallique ou plastique 40 qui délimite la surface cylindrique extérieure 32 de l'embout 26 qui est reçue, en coulissement avec un jeu radial faible, dans la surface cylindrique intérieure 42 du tronçon tubulaire d'extrémité de la canalisation 12.

La face annulaire d'extrémité 44 du manchon 40 délimite axialement, avec un épaulement radial 46 réalisé venu de matière avec l'embout tubulaire 26, une gorge radiale interne annulaire dans laquelle sont agencés deux joints toriques d'étanchéité 48 entre lesquels est disposée une entretoise tubulaire 50 qui évite que les joints ne roulent l'un sur l'autre lors des opérations de raccordement.

Les deux joints toriques 48 assurent le raccordement étanche entre les surfaces 32 et 42 en position raccordée de la canalisation 12, position dans laquelle son bord d'extrémité libre annulaire 18 est en appui contre la portion de surface annulaire transversale 34.

La virole 28 comporte un collet 52 qui s'étend radialement vers l'extérieur au voisinage de l'extrémité libre ouverte du logement 22 et qui délimite un bord annulaire 54 pour l'accrochage, par exemple par surmoulage, d'un élément de paroi 56 pour la fixation du corps 24 du raccord sur cet élément de paroi.

La nervure annulaire 20 formée sur la surface cylindrique périphérique 15 du tronçon d'extrémité de la canalisation 12 constitue un cran de retenue axiale du tronçon à l'intérieur du logement 22 du corps 24 du raccord qui coopère avec deux becs de retenue 58.

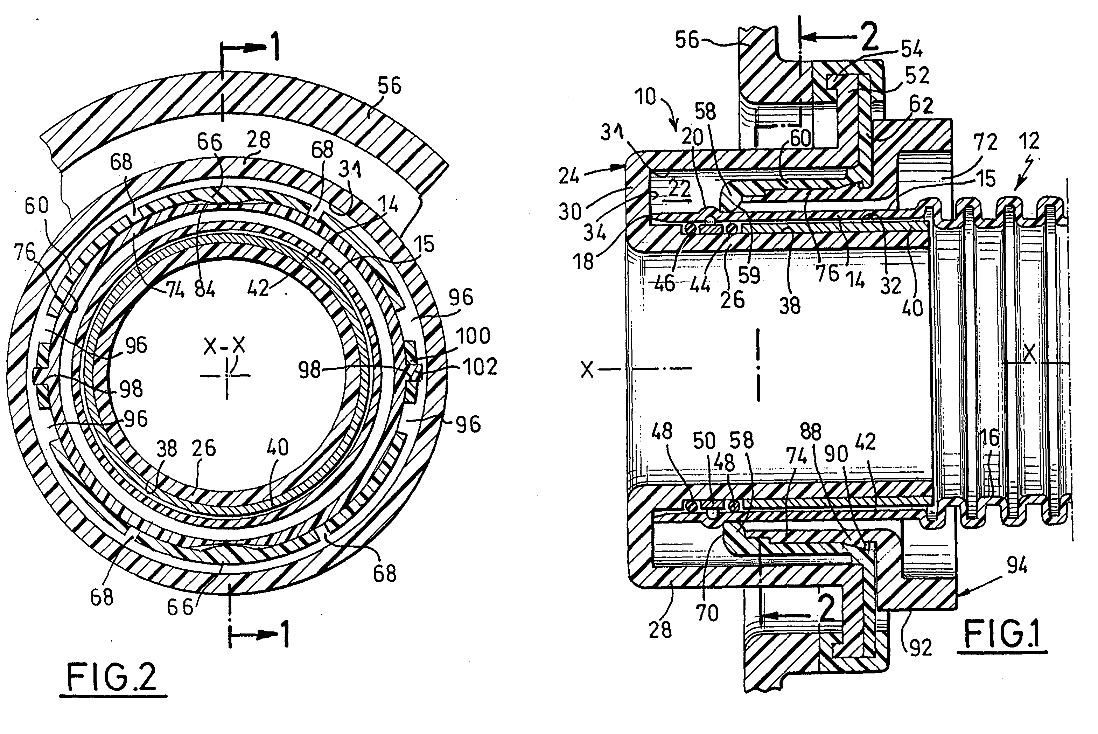

A cet effet, et comme on peut le voir sur les figures 1 à 3, le raccord comporte une douille cylindrique annulaire de retenue qui s'étend axialement à l'intérieur du logement 22.

La douille de retenue est fixée au corps 24 du raccord par une collerette radiale extérieure 62, réalisée venue de matière avec la douille, qui est fixée à la collerette 52 du corps 24 de manière à immobiliser la douille 60 axialement et en rotation par rapport au corps 24 du raccord.

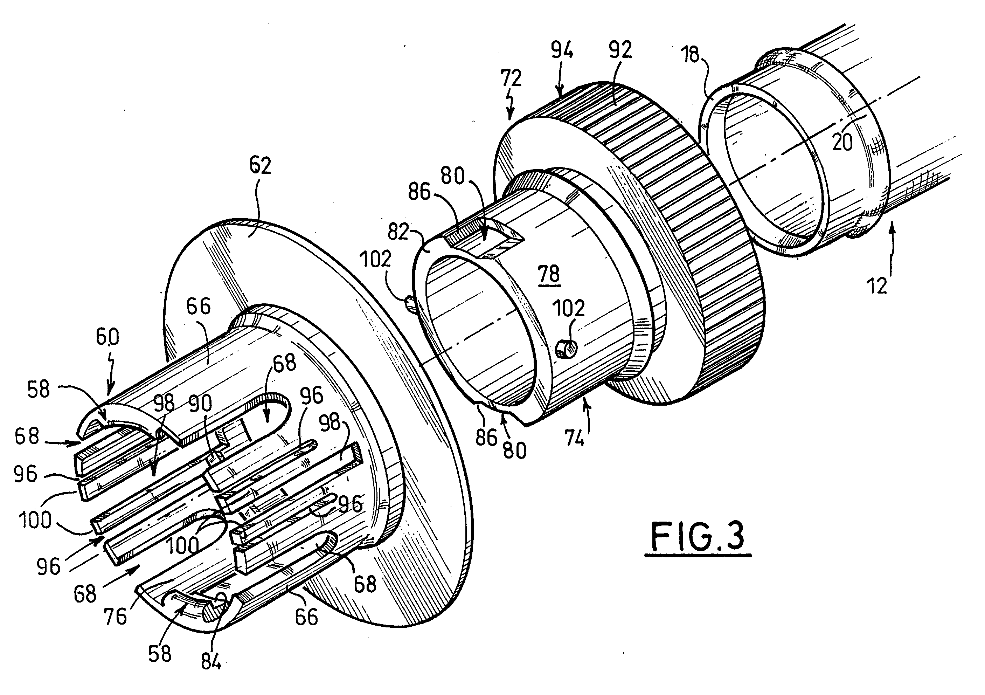

Comme on peut le voir notamment sur les figures 2 et 3, la douille de retenue comporte une série de fentes axiales qui débouchent toutes dans son bord annulaire d'extrémité.

Les becs de retenue 58 sont ainsi formés aux extrémités axiales libres de deux bras de retenue 66 dont chacun est délimité latéralement par une paire de fentes axiales 68.

Les deux bras de retenue 66 sont agencés de manière diamétralement opposée et constituent chacun une poutre déformable élastiquement reliée à sa base à la douille au voisinage de la collerette 62.

Chaque bec de retenue 58 comporte un bord transversal annulaire d'extrémité 70 qui est prévu pour coopérer en butée avec la nervure 20 de manière à immobiliser axialement le tronçon d'extrémité.

Lors d'introduction axiale du tronçon tubulaire d'extrémité du logement 22, de la droite vers la gauche en considérant la figure 1, le profil arrondi de la nervure 20 provoque la déformation élastique radiale vers l'extérieur de chacun des bras 60, en coopération avec le bec de retenue 58, de manière à provoquer l'écartement radial de ces derniers pour permettre le passage de la nervure 20 jusqu'à sa position de verrouillage illustrée sur la figure 1 dans laquelle, sous l'effet du rappel élastique exercé par les bras 66, les becs de retenue 58 sont situés en arrière de la nervure 20.

Afin de permettre l'extraction du tronçon tubulaire d'extrémité de la canalisation 12 hors du raccord 10, ce dernier comporte une bague 72 de commande du déverrouillage des becs de retenue 58.

La bague de retenue 72 comporte un corps tubulaire cylindrique 74 qui est monté à rotation à l'intérieur de la douille de retenue.

Le diamètre intérieur du corps tubulaire 74 de la bague de commande 72 est ainsi sensiblement égal au diamètre de la surface cylindrique intérieure 76 de la douille de retenue.

Afin de permettre le déverrouillage de la canalisation 12, en provoquant une déformation élastique radialement vers l'extérieur des bras 66, la surface cylindrique extérieure 78 du corps 74 de la bague de commande 72 comporte deux profils de came en creux 80 diamétralement opposés et qui sont agencés axialement au voisinage du bord annulaire d'extrémité libre 82 du corps 74.

Ces profils de came reçoivent chacun un renflement 84 formé en saillie dans la portion de la surface cylindrique intérieure 76 des bras de retenue 66.

Dans la position encliquetée illustrée sur les figures 1 et 2, les renflements 84 sont reçus dans les logements creux 80 du profil de came et les bras de retenue 66 occupent leur position de retenue dans laquelle les becs 58 coopèrent avec la nervure 20.

Chacun des logements 80 est délimité latéralement par deux bords inclinés 86 formant rampes qui permettent, par rotation de la bague de commande 72 par rapport au corps 24 du raccord, et donc par rapport à la douille, de provoquer l'écartement radial vers l'extérieur des bras de retenue 66 et donc des becs 58.

La bague de commande 72 est immobilisée axialement par rapport à la douille de retenue au moyen d'une nervure annulaire externe 88 qui est reçue dans une gorge complémentaire 90 formée dans la douille de retenue.

La bague de commande 72 peut ainsi être entraînée en rotation par rapport à la douille au moyen d'une partie de préhension qui est constituée par une surface cylindrique externe cannelée 92 d'une collerette cylindrique 94 formant poignée de commande de la rotation de la bague 72.

La bague de commande 72 est rappelée élastiquement de manière angulaire vers sa position de repos et d'encliquetage de la canalisation 12 illustrée aux figures 1 à 3.

A cet effet, la paroi tubulaire de la douille de retenue comporte deux séries, diamétralement opposées, de trois fentes axiales débouchantes 96 et 98.

Les fentes 96, en association avec la fente centrale 98, délimitent deux bras de rappel parallèles 100 qui sont utilisés en déformation élastique selon la direction circonférentielle.

Chacune des fentes axiales centrales 98 est prévue pour recevoir un ergot cylindrique 102 qui fait saillie en relief, radialement vers l'extérieur, sur la paroi du corps tubulaire 74 de la bague de retenue 72.

Afin de profiter d'un effet de rappel élastique maximum, les ergots 102 sont agencés au voisinage du bord d'extrémité 82 de la bague de commande 72 et donc au voisinage du bord d'extrémité annulaire 64 de la paroi tubulaire fendue de la douille de retenue.

Dans la position de repos d'encliquetage et de verrouillage illustrée aux figures 1 à 3, les bras de rappel élastique ne sont pas déformés.

On décrira maintenant le mode de fonctionnement de l'agencement selon l'invention en se reportant aux figures 1 à 4.

Lorsque l'utilisateur désire désaccoupler la canalisation 12 du raccord 10, il provoque la rotation de la bague de commande 72, dans l'un ou l'autre des deux sens de rotation, de manière à provoquer un écartement radial des becs de retenue 58 du fait de la coopération des rampes 86 des logements 80 avec les bossages en saillie 84.

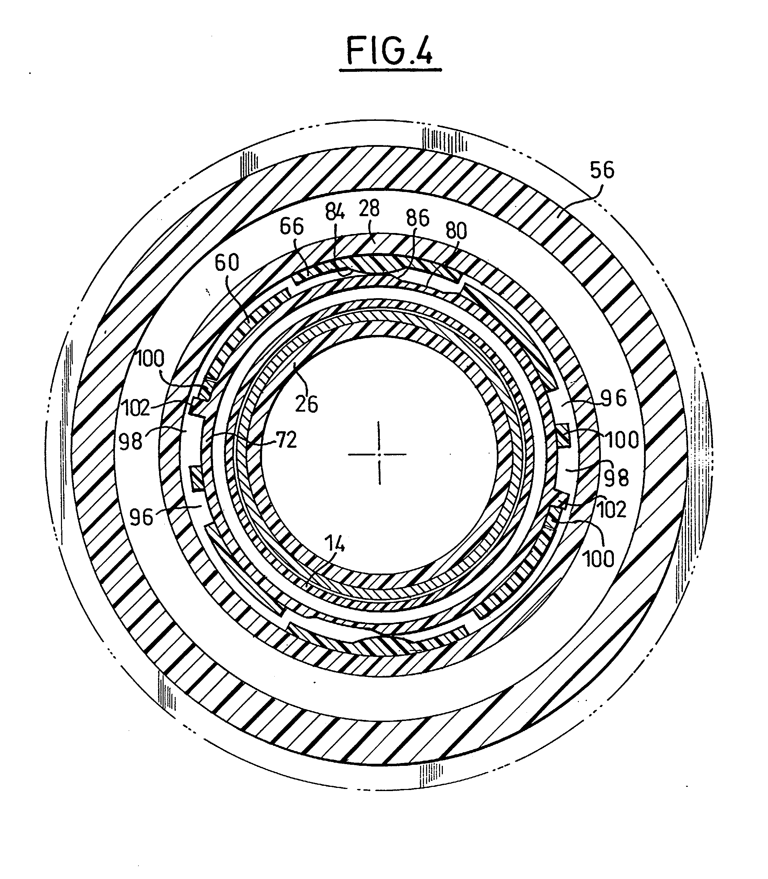

Au cours de cette rotation, les ergots 102 provoquent chacun la déformation d'un des bras de rappel élastique 100 comme cela est illustré sur la figure 4 sur laquelle la bague de commande 72 a tourné par rapport à la douille de retenue dans le sens horaire en considérant la figure.

La venue en butée des bras de rappel élastique 100 contre un bord en vis-à-vis d'une fente axiale 96 limite angulairement la faculté de déplacement en rotation de la bague de commande 72 par rapport à la douille de retenue.

Dans la position illustrée sur la figure 4, l'opérateur peut extraire axialement, de la gauche vers la droite en considérant la figure 1, le tronçon tubulaire d'extrémité de la canalisation 12 hors du logement 22, les becs 58 ne s'étendant plus en vis-à-vis de la rainure 20.

Dès que cette extraction est terminée, l'opérateur relâche la poignée 94 de la bague de commande 72, cette dernière étant rappelée élastiquement par le bras déformé de rappel 100 vers sa position de repos et d'encliquetage illustrée aux figures 1 et 2.

L'encliquetage de la canalisation 12 est particulièrement aisé dans la mesure où l'opérateur peut l'effectuer, sans aucune action sur la bague de commande 72, et donc avec une seule main en introduisant axialement le tronçon tubulaire d'extrémité à l'intérieur de la bague de commande 72 et de la douille de retenue jusqu'à ce que la nervure annulaire 20 vienne coopérer avec les faces inclinées 59 formant rampes des becs de retenue 58 pour provoquer l'effacement radial vers l'extérieur des becs 58 du fait de l'élasticité des bras de retenue 60.

Dès que la nervure 20 a dépassé axialement les becs 58, ces derniers sont rappelés élastiquement dans leur position de verrouillage illustrée aux figures 1 à 3.

On remarquera que la portée d'étanchéité du tronçon tubulaire d'extrémité de la canalisation 12 est constituée par une portion de surface cylindrique intérieure qui ne risque pas d'être endommagée lorsque la canalisation n'est pas raccordée. De même, les joints toriques d'étanchéité 48 sont protégés par la virole 28 du corps 24 du raccord 10 à l'intérieur, et au voisinage du fond, du logement 22.

## Revendications

1. Agencement pour le raccordement étanche et démontable de la portion d'extrémité (14) d'une canalisation tubulaire (12) sur un embout tubulaire (26) appartenant à un raccord (10) de canalisation, dont l'embout (26) étant reçu axialement et de manière étanche à l'intérieur de la portion d'extrémité (14) de la canalisation (12), et la portion d'extrémité (14) de la canalisation (12) étant retenue axialement par rapport au raccord par des moyens de retenue à emboîtement élastique qui sont agencés entre le raccord (10) et la surface périphérique (15) de la portion d'extrémité (14) de la canalisation (12) et qui comportent au moins un bras de retenue (60) déformable élastiquement muni d'un bec de retenue (58) qui coopère avec un cran de retenue (20), et des moyens (72) de commande de l'effacement du bec de retenue (58) pour permettre l'extraction axiale de la portion d'extrémité (14) de la canalisation (12) hors du raccord (10), caractérisé en ce que les moyens de retenue sont agencés dans un logement annulaire (22) délimité radialement par la surface cylindrique extérieure (32) de l'embout (26) et par la surface cylindrique interne (31) d'une virole (28) appartenant au corps (24) du raccord et qui est délimité axialement à l'une de ses extrémités par la portion de surface annulaire transversale (34) d'une paroi radiale (30) de liaison entre l'embout (26) et la virole (28).

2. Agencement selon la revendication 1, caractérisé en ce que le cran de retenue (20) est une nervure annulaire.

3. Agencement selon l'une quelconque des revendications précédentes, caractérisé en ce que le bras de retenue (60) s'étend axialement et en ce que le bec de retenue (58) est formé au voisinage d'une extrémité libre (64) du bras de retenue (60).

4. Agencement selon l'une quelconque des revendications précédentes, caractérisé en ce que le cran de retenue (20) est formé sur la surface périphérique (15) de la portion d'extrémité (14) de la canalisation (12) et en ce que le bras de retenue (60) est porté par le corps (24) du raccord (10).

5. Agencement selon la revendication 4 prise en combinaison avec la revendication 3, caractérisé en ce qu'il est prévu deux bras de retenue (60) diamétralement opposés.

6. Agencement selon l'une des revendications 4 ou 5 prises en combinaison avec la revendication 1, caractérisé en ce qu'il comporte une douille de retenue qui est liée en rotation au raccord (10), qui s'étend à l'intérieur dudit logement annulaire (22) et dont la paroi annulaire (66) est fendue axialement pour délimiter, par deux fentes parallèles (68), au moins un bras de retenue (60) déformable élastiquement réalisé venu de matière avec la douille de retenue.

7. Agencement selon l'une quelconque des revendications précédentes, caractérisé en ce que les moyens de commande de l'effacement du bec de retenue (58) comportent un organe mobile de commande (72) qui comporte une came (80, 86) de commande des déformations élastiques du bras de retenue (60).

8. Agencement selon la revendication 7, caractérisé en ce que l'organe de commande (72) est rappelé élastiquement vers une position de repos dans laquelle le bec de retenue (58) est rappelé élastiquement vers une position de retenue axiale de la portion d'extrémité (14) de la canalisation (12).

9. Agencement selon la revendication 8 prise en combinaison avec la revendication 4, caractérisé en ce que l'organe de commande (72) est monté mobile par rapport au corps (24) du raccord.

10. Agencement selon la revendication 9, caractérisé en ce que l'organe de commande (72) est monté mobile en rotation.

11. Agencement selon la revendication 10 prise en combinaison avec la revendication 6, caractérisé en ce que l'organe de commande (72) est une bague de commande qui est montée à rotation à l'intérieur de la douille de retenue et dont la surface extérieure comporte une came (80, 86) qui coopère avec une partie en vis-à-vis (84) formée sur la surface intérieure (76) du bras de retenue (60).

12. Agencement selon la revendication 11, caractérisé en ce que la bague de commande (72) comporte une collerette (94) formant poignée de commande qui s'étend axialement à l'extérieur de la douille de retenue (60) et du logement annulaire (22).

13. Agencement selon l'une des revendications 11 ou 12, caractérisé en ce que la paroi annulaire (66) de la douille de retenue (60) est fendue axialement par trois fentes parallèles (96, 98) pour délimiter deux bras (100) de rappel déformables élastiquement entre lesquels est reçu un ergot (102) formé en saillie sur la surface extérieure de la bague de commande (72).

14. Agencement selon la revendication 13, caractérisé en ce que la douille de retenue comporte deux paires de bras de rappel (100) diamétralement opposées, avec chacune desquelles coopère un ergot (102) de la bague de commande (72).

15. Agencement selon la revendication 14 prise en combinaison avec la revendication 5, caractérisé en ce que les bras de rappel (100) sont agencés dans un plan axial décalé angulairement de 90° par rapport au plan des bras de retenue (60).

16. Agencement selon la revendication 1, caractérisé en ce que, en position raccordée, le bord d'extrémité libre (18) de la portion d'extrémité (14) de la canalisation (12) est en appui contre la face annulaire en vis-à-vis (34) de la paroi radiale (30) du raccord (24) de manière à immobiliser axialement la canalisation (12) par rapport au raccord.

17. Agencement selon l'une quelconque des revendications précédentes, caractérisé en ce que la surface périphérique (32) de l'embout comporte une gorge annulaire qui reçoit au moins un joint torique d'étanchéité (48).

18. Agencement selon la revendication 17, caractérisé en ce que la gorge annulaire reçoit deux joints toriques d'étanchéité (48) entre lesquels est agencée une entretoise tubulaire (50).

19. Agencement selon la revendication 18, caractérisé en ce que la gorge annulaire est délimitée axialement par un épaulement radial (46) réalisé venu de matière avec le corps tubulaire de l'embout (26) et par la face annulaire d'extrémité (44) d'un manchon extérieur (42) rapporté sur le corps de l'embout (26) dont la surface cylindrique extérieure (32) est reçue en coulissement à l'intérieur de la portion d'extrémité (14) de la canalisation (12).

## Patentansprüche

1. Anordnung zur dichten und trennbaren Verbindung des Endabschnitts (14) einer Rohrleitung (12) mit einem rohrförmigen Endstück (26), das zu einer Leitungskupplung (10) gehört, wobei das Endstück (26) axial und dicht im Innern des Endabschnitts (14) der Rohrleitung (12) eingesetzt ist und der Endabschnitt (14) der Rohrleitung (12) im Verhältnis zur Kupplung axial durch elastisch eingepaßte Haltemittel gehalten wird, die zwischen der Kupplung (10) und der Umfangsfläche (15) des Endabschnitts (14) der Rohrleitung (12) angeordnet sind und die mindestens einen elastisch verformbaren Haltearm (60) mit einer Haltenase (58), die mit einer Halteraste (20) zusammenwirkt, und Betätigungsmittel (72) für das Versenken der Haltenase (58) umfassen, um das axiale Herausziehen des Endabschnitts (14) der Rohrleitung (12) aus der Kupplung (10) zu ermöglichen, **dadurch gekennzeichnet**, daß die Haltemittel in einer ringförmigen Aufnahme (22) angeordnet sind, die radial durch die zylindrische Außenfläche (32) des Endstücks (26) und durch die zylindrische Innenfläche (31) eines zum Körper (24) der Kupplung gehörenden Rohrrings (28) begrenzt wird und die axial an einem ihrer Enden durch die ringförmige Querteilfläche (34) einer radialen Verbindungswand (30) zwischen dem Endstück (26) und dem Rohrring (28) begrenzt wird.

2. Anordnung nach Anspruch 1 , **dadurch gekennzeichnet**, daß die Halteraste (20) eine ringförmige Rippe ist.

3. Anordnung nach einem der vorangehenden Ansprüche, **dadurch gekennzeichnet**, daß sich der Haltearm (60) axial erstreckt und daß die Haltenase (58) in der Nähe eines freien Endes (64) des Haltearms (60) ausgebildet ist.

4. Anordnung nach einem der vorangehenden Ansprüche, **dadurch gekennzeichnet**, daß die Halteraste (20) an der Umfangsfläche (15) des Endabschnitts (14) der Rohrleitung (12) ausgebildet ist und daß der Haltearm (60) am Körper (24) der Kupplung (10) angebracht ist.

5. Anordnung nach Anspruch 4 in Kombination mit Anspruch 3, **dadurch gekennzeichnet**, daß zwei diametral gegenüberliegende Haltearme (60) vorgesehen sind.

6. Anordnung nach einem der Ansprüche 4 oder 5 in Kombination mit Anspruch 1 , **dadurch gekennzeichnet**, daß sie eine drehfest mit der Kupplung (10) verbundene Haltehülse umfaßt, die sich im Innern der besagten ringförmigen Aufnahme (22) erstreckt und deren ringförmige Wand (66) axial geschlitzt ist, um durch zwei parallele Schlitze (68) mindestens einen elastisch verformbaren Haltearm (60) zu begrenzen, der einstückig an der Haltehülse angeformt ist.

7. Anordnung nach einem der vorangehenden Ansprüche, **dadurch gekennzeichnet**, daß die Betätigungsmittel zur Versenkung der Haltenase (58) ein bewegliches Betätigungsorgan (72) umfassen, das einen Betätigungsnocken (80, 86) für die elastischen Verformungen des Haltearms (60) enthält.

8. Anordnung nach Anspruch 7 , **dadurch gekennzeichnet**, daß das Betätigungsorgan (72) elastisch zu einer Ruheposition zurückgestellt wird, in der die Haltenase (58) elastisch zu einer axialen Halteposition für den Endabschnitt (14) der Rohrleitung (12) zurückgestellt wird.

9. Anordnung nach Anspruch 8 in Kombination mit Anspruch 4, **dadurch gekennzeichnet**, daß das Betätigungsorgan (72) beweglich im Verhältnis zum Körper (24) der Kupplung gelagert ist.

10. Anordnung nach Anspruch 9 , **dadurch gekennzeichnet**, daß das Betätigungsorgan (72) drehbeweglich gelagert ist.

11. Anordnung nach Anspruch 10 in Kombination mit Anspruch 6, **dadurch gekennzeichnet**, daß das Betätigungsorgan (72) ein Betätigungsring ist, der drehbar im Innern der Haltehülse gelagert ist und dessen Außenfläche einen Nocken (80, 86) umfaßt, der mit einem gegenüberliegenden Teil (84) zusammenwirkt, der an der Innenfläche (76) des Haltearms (60) ausgebildet ist.

12. Anordnung nach Anspruch 11, **dadurch gekennzeichnet**, daß der Betätigungsring (72) einen als Betätigungsgriff ausgebildeten Kragen (94) umfaßt, der sich axial außerhalb der Haltehülse (60) und der ringförmigen Aufnahme (22) erstreckt.

13. Anordnung nach einem der Ansprüche 11 oder 12, **dadurch gekennzeichnet**, daß die ringförmige Wand (66) der Haltehülse (60) axial durch drei parallele Schlitze (96, 98) geschlitzt ist, um zwei elastisch verformbare Rückstellarme (100) zu begrenzen, zwischen denen ein Zapfen (102) eingesetzt ist, der vorspringend an der Außenfläche des Betätigungsrings (72) ausgebildet ist.

14. Anordnung nach Anspruch 13, **dadurch gekennzeichnet**, daß die Haltehülse zwei diametral gegenüberliegenden Paare von Rückstellarmen (100) umfaßt, mit denen jweils ein Zapfen (102) des Betätigungsrings (72) zusammenwirkt.

15. Anordnung nach Anspruch 14 in Kombination mit Anspruch 5, **dadurch gekennzeichnet**, daß die Rückstellarme (100) in einer axialen Ebene angeordnet sind, die winklig um 90° im Verhältnis zur Ebene der Haltearme (60) versetzt ist.

16. Anordnung nach Anspruch 1 , **dadurch gekennzeichnet**, daß in Verbindungsposition die freie Abschlußkante (18) des Endabschnitts (14) der Rohrleitung (12) an der gegenüberliegenden ringförmigen Fläche (34) der radialen Wand (30) der Kupplung (24) anliegt, so daß die Rohrleitung (12) im Verhältnis zur Kupplung axial gesichert ist.

17. Anordnung nach einem der vorangehenden Ansprüche, **dadurch gekennzeichnet**, daß die Umfangsfläche (32) des Endstücks eine ringförmige Auskehlung enthält, in die mindestens ein Runddichtring (48) eingesetzt ist.

18. Anordnung nach Anspruch 17, **dadurch gekennzeichnet**, daß in die ringförmige Auskehlung zwei Runddichtringe (48) eingesetzt sind, zwischen denen ein rohrförmiges Zwischenelement (50) angeordnet ist.

19. Anordnung nach Anspruch 18, **dadurch gekennzeichnet**, daß die ringförmige Auskehlung axial durch eine radiale Schulter (46), die einstückig am rohrförmigen Körper des Endstücks (26) angeformt ist, und durch die ringförmige Abschlußfläche (44) einer Außenmuffe (42) begrenzt wird, die am Körper des Endstücks (26) angefügt ist, dessen zylindrische Außenfläche (32) verschiebbar im Innern des Endabschnitts (14) der Rohrleitung (12) eingesetzt ist.

## Claims

1. A disconnectable device for the sealed coupling of the end portion (14) of a tubular pipe (12) on a tubular terminal element (26) of a pipe coupling (10), in which the terminal element (26) is received axially and sealingly within the end portion (14) of the pipe (12), and the end portion (14) of the pipe (12) is received axially with respect to the pipe coupling by resiliently mating retaining means which are arranged between the pipe coupling (10) and the peripheral surface (15) of the end portion (14) of the pipe (12), and which comprise at least one resiliently deformable retaining arm (60) having a retaining lip (58) which cooperates with a retaining bead element (20), and means (72) for controlling the retraction of the retaining lip (58) so as to enable the end portion (14) of the pipe (12) to be extracted axially out of the pipe coupling (10), characterised in that the retaining means are arranged within an annular housing (22) which is delimited radially by the outer cylindrical surface (32) of the terminal element (26) and by the inner cylindrical surface (31) of a collar element (28) of the body (24) of the pipe coupling, and which is delimited axially at one of its ends by the annular transverse surface portion (34) of a radial wall portion (30) disposed between, and joining together, the terminal element (26) and the collar element (28).

2. A device according to Claim 1, characterised in that the retaining bead element (20) is an annular rib.

3. A device according to either one of the preceding Claims, characterised in that the retaining arm (60) extends axially, and in that the retaining lip (58) is formed in the vicinity of a free end (64) of the retaining arm (60).

4. An arrangement according to any one of the preceding Claims, characterised in that the retaining bead element (20) is formed on the peripheral surface (15) of the end portion (14) of the pipe (12), and in that the retaining arm (60) is carried by the body (24) of the pipe coupling (10).

5. A device according to Claim 4 taken in combination with Claim 3, characterised in that two diametrically opposed retaining arms (60) are provided.

6. A device according to Claim 4 or Claim 5, taken in combination with Claim 1, characterised in that it includes a retaining sleeve which is coupled in rotation to the pipe coupling (10), and which extends inside the said annular housing (22), the annular wall (66) of the retaining sleeve being slotted axially so as to define, by two parallel slots (68), at least one resiliently deformable retaining arm (60) formed integrally with the retaining sleeve.

7. A device according to any one of the preceding Claims, characterised in that the means for controlling the retraction of the retaining lip (58) comprise a movable control member (72) which includes a cam (80, 86) for controlling resilient deformations of the retaining arm (60).

8. A device according to Claim 7, characterised in that the control member (72) is biassed resiliently towards a rest position in which the retaining lip (58) is urged resiliently towards a position for axially retaining the end portion (14) of the pipe (12).

9. A device according to Claim 8 taken in combination with Claim 4, characterised in that the control member (72) is mounted for movement with respect to the body (24) of the pipe coupling.

10. A device according to Claim 9, characterised in that the control member (72) is mounted for rotation.

11. A device according to Claim 10 taken in combination with Claim 6, characterised in that the control member (72) is a control ring which is mounted for rotation within the retaining sleeve, with its outer surface including a cam (80, 86) which cooperates with a portion (84) in facing relationship therewith and formed on the inner surface (76) of the retaining arm (60).

12. A device according to Claim 11, characterised in that the control ring (72) includes a collar portion (94) which constitutes a manual control element and which lies axially outside the retaining sleeve (60) and outside the annular housing (22).

13. A device according to Claim 11 or Claim 12, characterised in that the annular wall (66) of the retaining sleeve (60) is slotted axially with three parallel slots (96, 98) so as to define two resiliently deformable biassing arms (100), between which there is received a peg (102) formed on and projecting from the outer surface of the control ring (72).

14. A device according to Claim 13, characterised in that the retaining sleeve has two pairs of diametrically opposed biassing arms (100), with each of which a peg (102) of the control ring (72) cooperates.

15. A device according to Claim 14 taken in combination with Claim 5, characterised in that the biassing arms (100) are disposed in an axial plane which is offset angularly by 90 degrees with respect to the plane of the retaining arms (60).

16. A device according to Claim 1, characterised in that, in the coupled position, the free terminal edge (18) of the end portion (14) of the pipe (12) is in abutment against the annular face (34), in facing relationship with it, of the radial wall portion (30) of the pipe coupling (24), so as to immobilise the pipe (12) axially with respect to the pipe coupling.

17. A device according to any one of the preceding Claims, characterised in that the peripheral surface (32) of the terminal element has an annular groove which receives at least one sealing O-ring (48).

18. A device according to Claim 17, characterised in that the annular groove receives two sealing O-rings (48), between which a tubular spacer (50) is arranged.

19. A device according to Claim 18, characterised in that the annular groove is delimited axially by a radial shoulder (46) formed integrally with the tubular body of the terminal element (26), and by the annular end face (44) of an outer sleeve (42) which is mounted on the body of the terminal element (26), the outer cylindrical surface (32) of which is received in sliding movement within the end portion (14) of the pipe (12).
